# EUROPEAN PATENT APPLICATION

(11) **EP 1 381 226 A1**
(43) Date of publication of application: **14.01.2004**
(21) Application number: 02015730.1
(22) Date of filing: 12.07.2002
(51) Int. Cl.: H04N 5/21

(54) **Method and system for reducing noise contained within a video signal**

(71) Applicant: Sony International (Europe) GmbH, 10785 Berlin (DE)
(72) Inventor: Dilly, Altfried, Advanced Techn., Center Stuttgart, 70327 Stuttgart (DE); Freiburg, Volker, Adv. Techn., Center Stuttgart, 70327 Stuttgart (DE); Wagner, Peter, Advanced Techn., Center Stuttgart, 70327 Stuttgart (DE)
(74) Representative: Müller - Hoffmann & Partner

(57) **Abstract**

A method for reducing noise contained within a video input signal (S1) comprises the following steps: a) spatially filtering said video input signal (S1) to obtain a spatially filtered signal (S2), b) supplying said spatially filtered signal (S2) and said video input signal (S1) to a first mixing means (3) which mixes these signals to generate a first mixed signal (S3), c) supplying said first mixed signal (S3) as one of two input signals to a second mixing means (4) which mixes said two input signals to generate a desired noise reduced video output signal (S4), said video output signal (S4) also being fed back to said second mixing means in a delayed manner to serve as the other one (S5) of said two input signals, wherein respective mixing ratios used during steps b) and c) are dynamically determined in dependence of a motion detection process.

## Description

The invention relates to a method and system for reducing noise contained within a video signal.

Noise contained within video signals is a well known phenomenon. In order to cancel such noise, a lot of research has been done resulting in many different noise reduction techniques.

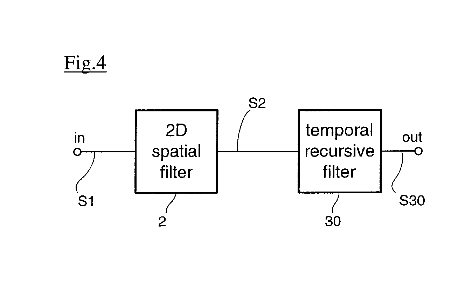

A common approach when dealing with video signals containing motion is to perform both a spatial filtering process and a temporal recursive filtering process in order to cancel superimposed noise. This approach is illustrated by Fig. 4:

A video input signal S1 serves as input of a two-dimensional spatial filter 2. The two-dimensional spatial filter 2 outputs a corresponding spatially filtered video signal S2 and supplies this signal to a temporal recursive filter 30. The temporal recursive filter 30 outputs a corresponding temporally recursive filtered video signal S30 which is the desired noise reduced output signal.

However, the filter mechanism shown by Fig. 4 has the disadvantage that spatial filtering usually leads to clearly visible image artifacts, in particular when using effectively working spatial filters. Consequently, above described mechanism is only applicable to cases where rather weak spatial filters are employed. This, however, makes it difficult to effectively cancel motion related noise from the video input signal S1.

It is an object of the present invention to provide a method and a system for reducing noise contained within a video signal which make it possible to effectively reduce noise of both video signals containing motion and video signals containing no motion.

To solve this object, the present invention provides a method for reducing noise contained within a video signal according to claim 1. Further, the invention provides a system for reducing noise according to claim 12. In addition, the invention provides a computer program product according to claim 13. Last, a computer readable storage means according to claim 14 is provided. Further features and embodiments are described in respective subclaims, respectively.

According to the present invention, a method for reducing noise contained within a video input signal comprises the following steps:
a) spatially filtering said video input signal to obtain a spatially filtered signal,
b) supplying said spatially filtered signal and said video input signal to a first mixing means which mixes these signals to generate a first mixed signal,
c) supplying said first mixed signal as one of two input signals to a second mixing means which mixes said two input signals to generate a desired noise reduced video output signal, said video output signal also being fed back to said second mixing means in a delayed manner to serve as the other one of said two input signals, wherein respective mixing ratios used during steps b) and c) are dynamically determined in dependence of a motion detection process.

The main advantage of above described method is that good noise suppression can be achieved for both still and moving video sequences while at the same time visual impairments caused by the noise reduction process are minimized.

An important aspect of the present invention is that four different internal video signals are mixed together in order to obtain the desirered noise reduced video output signal: the video input signal, the spatially filtered signal, the first mixed signal, and the delayed video output signal. Since the mixing ratios of those signals are dynamically determined (according to the content of said video input signal), a very flexible noise reduction mechanism is provided which effectively reduces noise of both video signals containing motion and video signals containing no motion.

In a preferred embodiment, the mixing ratio used during step b) is determined so that the first mixing means emphasises the spatial filtered signal more if the motion detection process detects high motion, and emphasises the video input signal more if the motion detection process detects low motion. Accordingly, the mixing ratio used during step c) is determined so that the second mixing means emphasises the first mixed signal more if the motion detection process detects high motion, and emphasises the delayed video output signal more if the motion detection process detects low motion. This dynamical emphasising process may be summarized as follows: in the case of high motion those internal signals are emphasised more which yield better motion related results, whereas in the case of low motion those internal signals are emphasised more which yield better results for still images.

In a preferred embodiment, the motion detection process uses the delayed output signal and the spatially filtered signal in order to determine motion present within the input video signal. Alternatively, the motion detection process may use the spatially filtered signal and a delayed signal of the spatially filtered signal in order to determine motion present within the input video signal.

The fed back delayed video output signal may be motion compensated before being supplied as input signal to the second mixing means and/or before being used as input signal of the motion detection process. This shall mean that a motion of objects shown and described in that images corresponding to the signals is compensated by the process of motion compensation. In this case, the motion compensation of the fed back delayed video output signal may be done on the basis of a motion signal or motion map signal being representative for motion contained within the delayed video output signal, the motion signal or motion map signal being generated by a second motion estimation and/or detection process which uses the delayed video output signal and the video input signal and/or the spatially filtered signal as respective input signals to estimate the motion contained within the delayed video output signal.

In the context of this invention the notions "motion signal" and "motion map signal" are used equivalently.

The motion map signal may also be used to dynamically determine the mixing ratios used during steps b) and c).

The mixing ratio used during step c) may be dynamically determined so that said second mixing means emphasises the first mixed signal more if signals and in particular the motion map signals indicate or show significant differences and in particular high motion, and emphasises the delayed video output signal more if said differences are minor, in particular if said motion is low.

Alternatively or additionally, said mixing ratio used during step c) might be determined so that said second mixing means emphasizes said first mixed signal more if said spatially filtered signal strongly differs from said delayed and motion compensated video output signal, and emphasizes said delayed and motion compensated video output signal more if said spatially filtered signal only slightly differs from said delayed and motion compensated video output signal.

Alternatively or additionally, said mixing ratio used during step c) might be determined so that said second mixing means emphasizes said first mixed signal more if said spatially filtered signal strongly differs from said delayed video output signal, and emphasizes said delayed video output signal more if said spatially filtered signal only slightly differs from said delayed video output signal.

Furthermore, alternatively or additionally, said mixing ratio used during step c) might be determined dependent on external parameters, e.g. a noise level of the input signal.

The invention further provides a system for reducing noise contained within an input video signal which is capable of performing and/or realising the inventive method for reducing noise described above and/or the steps thereof.

The invention further provides a computer program product, comprising computer program means adapted to perform and/or realise the method for reducing noise described above and/or the steps thereof, when it is executed on a computer, a digital signal processing means, or the like.

Last, the invention provides a computer readable storage means for storing a computer program product as described above.

Further embodiments, .features and advantages will be described in the following description while making reference to the accompagnying drawings, wherein:
- **Fig. 1**: shows a first embodiment of the inventive method/system for reducing noise.
- **Fig. 2**: shows a second embodiment of the inventive method/system for reducing noise.
- **Fig. 3**: shows a third embodiment of the inventive method/system for reducing noise.
- **Fig. 4**: shows a known method/system for reducing noise according to the prior art.

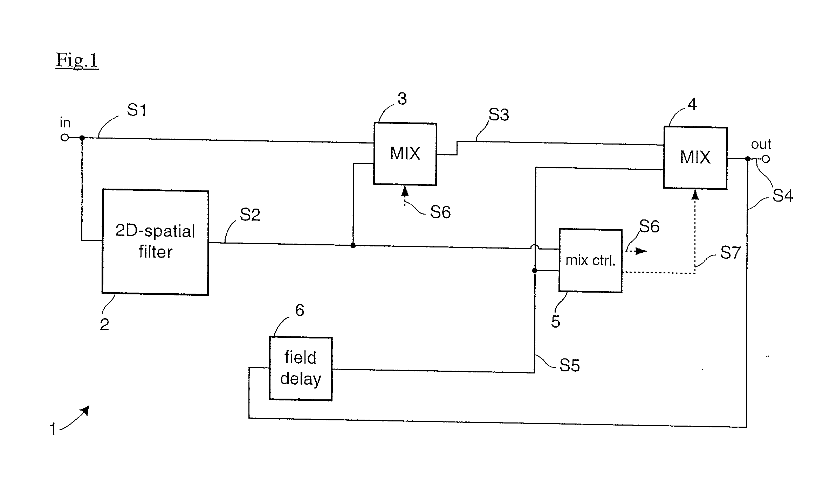

According to Fig. 1, a first embodiment 1 of an inventive system for reducing noise comprises a filter 2, a first mixing means 3, a second mixing means 4, a mixing controlling means 5, and a delaying means 6.

A video input signal S1 is supplied to both the filter 2, in particular a two-dimensional spatial filter, and the first mixing means 3. The filter 2 spatially filteres the video input signal S1 and outputs a spatially filtered signal S2 which is supplied to both the first mixing means 3 and the mixing controlling means 5, The first mixing means 3 mixes the spatially filtered signal S2 and the video input signal S1 and outputs a first mixed signal S3. The first mixed signal S3 is supplied as one of two input signals to the second mixing means 4 which mixes said two input signals to generate a desired noise reduced video output signal S4. The video output signal S4 is also fed back to the delaying means 6 which delays the video output signal S4 to obtain a delayed signal S5. The delayed signal S5 is supplied to both the second mixing means 4 to serve as the other one of said two input signals and to the mixing controlling means 5.

The mixing controlling means 5 detects on the basis of the spatially filtered signal S2 and the delayed signal S5 if motion is present within the video input signal S1. On the basis of said motion detection process the mixing controlling means 5 generates two control signals: A first control signal S6 is used to determine the mixing ratio used by the first mixing means 3, whereas a second control signal S7 is used to determine the mixing ratio used by the second mixing means 4. The control signals S6, S7 are dynamically determined in dependence of the motion currently detected.

If motion/high motion has been detected by the mixing controlling means 5, the first control signal S6 is determined in a way that the first mixing means 3 emphasizes the spatially filtered signal S2 over the video input signal S1. In the case of no/low motion the first control signal S6 is determined in a way that the first mixing means 3 emphasizes the video input signal S1 over the spatially filtered signal S2.

Accordingly, if motion/high motion has been detected by the mixing controlling means 5, the second control signal S7 is determined in a way that the second mixing means 4 emphasizes the first mixed signal S3 over the delayed signal S5. In the case of no/low motion the second control signal S7 is determined in a way that the second mixing means 4 emphasizes the delayed signal S5 over the first mixed signal S3.

In other words, the generation of control signals (first and second control signal S6, S7) is motion adaptive. Thus, the mixing processes are also motion adaptive.

The method described above may also be performed individually for parts of a video field. For example, the first mixing means 3 may use different mixing ratios for different parts of one single video field if only parts of a video field show motion. The same holds true for the second mixing means 4.

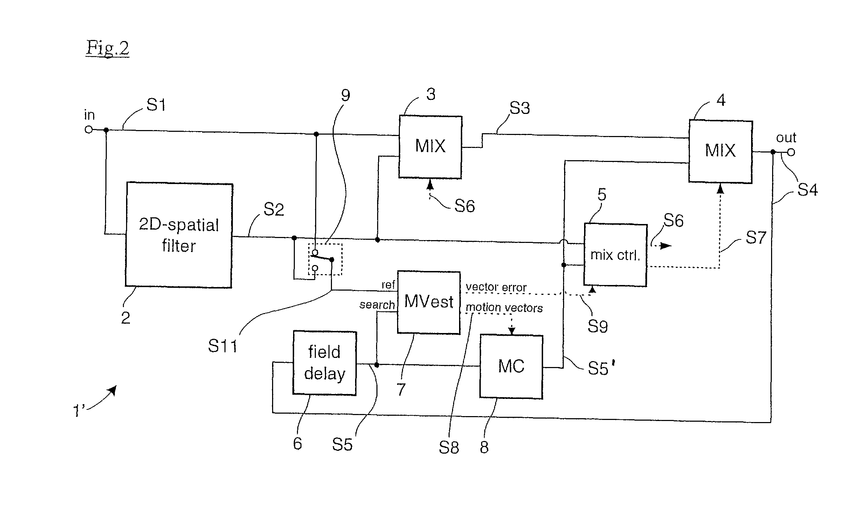

According to Fig. 2, a second embodiment 1' of an inventive system for reducing noise also comprises a filter 2, a first mixing means 3, a second mixing means 4, a mixing controlling means 5, and a delaying means 6. In addition, the second embodiment 1' comprises a motion estimation means 7, a motion compensation means 8 and a switch 9 having two switching states I and II for choosing one of the video input signal S1 or the spatially filtered signal S2 as a reference signal S11 to be input to the motion estimation means 7.

Alternatively, the switching functionality of switch 9 can be omitted by realizing fixed connections between the motion estimation means 7 and the video input signal S1 or the spatially filtered signal S2 corresponding to the switching states I and II, respectively, for the determination of the reference signal S11.

The second embodiment 1' is operated in the same way as the first embodiment 1 as far as the filter 2, the first mixing means 3, the second mixing means 4, the mixing controlling means 5, and the delaying means 6 are concerned. Therefore, a corresponding description thereof will be omitted. In the following, the way of operating the additional components (motion estimation means 7, motion compensation means 8 and switch 9) will be explained:

The delayed signal S5 is supplied as one of two input signals to the motion estimation means 7. The other one of said two input signals is either the spatially filtered signal S2 or the video input signal S1, i. e. the reference signal S11. The motion estimation means 7 determines if motion is present within the delayed signal S5 in regard to the current reference signal S11 and generates a corresponding motion map signal S8 (preferably a motion vector map) representative for estimated motion which is supplied to the motion compensation means 8. The motion compensation means 8 then compensates motion present within the delayed signal S5 on the basis of the motion map signal S8 and generates a delayed and motion compensated signal S5' which is then input to the second mixing means 4 and the mixing controlling means 5.

The motion estimation means 7 may further generate an error signal S9. The error signal S9 serves as a confidence and/or quality measure for the motion map signal S8 and may be supplied to the mixing controlling means 5. The mixing controlling means 5 may then use the error signal S9 to change the second control signal S7 in a way that the second mixing means 4 emphasises the first mixed signal S3 over the delayed signal S5 in case the error signal S9 indicates unreliable motion vectors. The same may be done with respect to the first control signal S6, too.

As has been described above, in the first and the second embodiment 1, 1', the spatially filtered signal S2 is compared with the delayed signal S5 or the delayed and motion compensated signal S5' in order to generate the first and second control signals S6, S7. This helps to reduce the severity for a systematic problem in these configurations: In the mixing controlling means 5 it is not possible to distinguish between diversions from zero or non-zero differences caused by noise and/or caused by motion and/or deficiencies of the motion compensation means 8. Therefore the mixing controlling means 5 is typically designed in such a way to find a balance for a given noise level. In the described arrangement the noise level is already reduced on both input signals of the mixing controlling means 5 so that the generation process of the first and the second control signals S6, S7 is more robust, which allows a stronger noise reduction especially for higher noise levels and causes less visible motion artifacts.

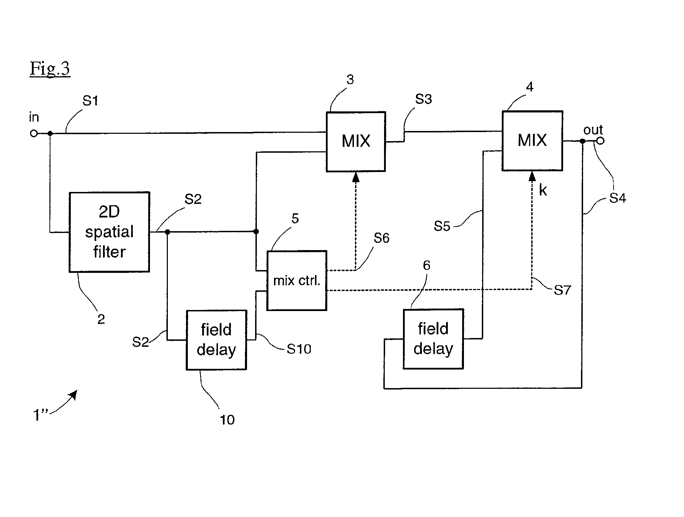

According to Fig. 3, a third embodiment 1" of an inventive system for reducing noise also comprises a filter 2, a first mixing means 3, a second mixing means 4, a mixing controlling means 5, and a delaying means 6. In addition, the third embodiment 1" comprises a second delaying means 10.

The third embodiment 1" is operated in the same way as the first embodiment 1 as far as the filter 2, the first mixing means 3, the second mixing means 4, and the delaying means 6 are concerned. Therefore, a corresponding description thereof will be omitted. In the following, the way of operating the mixing controlling means 5 and the second delaying means 10 will be explained:

The spatially filtered signal S2 is supplied to both the mixing controlling means 5 (as first input signal) and the second delaying means 10. An output signal S10 of the second delaying means 10 serves as second input signal of the mixing controlling means 5. This embodiment has the advantage that both input signals of the mixing controlling means 5 are strongly pre-filtered (by the filter 2). This ensures that misdetection of motion is further reduced.

A reasoning behind the above described embodiments, in particular with respect to the way of determining the mixing ratios, is as follows:

The best method - with the least impact to image content - for noise reduction given a sequence of still images is a strong temporal recursion. Of course this fails dramatically when image parts are merged which do not belong together. This might be the case for moving objects in the image stream; or in case of the usage of a motion compensated feedback image when the vector estimation did not result in a precise match or when the motion compensated image part contains an object border. Only for regions where this case applies the spatially filtered signal S2 is used for noise reduction.

The inventive method/system may preferably be applied to analogue video input signals.

## Claims

1. Method for reducing noise contained within a video input signal (S1), comprising the following steps:
a) spatially filtering said video input signal (S1) to obtain a spatially filtered signal (S2),
b) supplying said spatially filtered signal (S2) and said video input signal (S1) to a first mixing means (3) which mixes these signals to generate a first mixed signal (S3),
c) supplying said first mixed signal (S3) as one of two input signals to a second mixing means (4) which mixes said two input signals to generate a desired noise reduced video output signal (S4), said video output signal (S4) also being fed back to said second mixing means (4) in a delayed manner to serve as the other one (S5) of said two input signals, wherein respective mixing ratios used during steps b) and c) are dynamically determined in dependence of a motion detection process.

2. Method according to claim 1, **characterized by** determining said mixing ratio used during step b) so that said first mixing means (3) emphasises said spatial filtered signal (S2) more if said motion detection process detects high motion, and emphasises said video input signal (S1) more if said motion detection process detects low motion.

3. Method according to claim 1 or 2, **characterized by** determining said mixing ratio used during step c) so that said second mixing means (4) emphasises said first mixed signal (S3) more if said motion detection process detects high motion, and emphasises said delayed video output signal (S5) more if said motion detection process detects low motion.

4. Method according to anyone of the claims 1 to 3, **characterized in that** said motion detection process uses said delayed output signal (S5) and said spatially filtered signal (S2) in order to determine motion present within said input video signal (S1).

5. Method according to anyone of the claims 1 to 3, **characterized in that** said motion detection process uses said spatially filtered signal (S2) and a delayed signal of said spatially filtered signal (S10) in order to determine motion present within said input video signal (S1).

6. Method according to anyone of the claims 1 to 4, **characterized in that** said fed back delayed video output signal (S5) is motion compensated before being supplied as input signal to said second mixing means (4) and/or before being used as input signal of said motion detection process (5).

7. Method according to claim 6, **characterized in that** said motion compensation of said fed back delayed video output signal (S5) is done on the basis of at least one motion map signal (S8) or error signal (S9) being representative for motion contained within said delayed video output signal (S5), said motion map signal (S8) being generated by a second motion estimation and/or detection process which uses said delayed video output signal (S5) and said video input signal (S1) or said spatially filtered signal (S2) as respective input signals to estimate said motion contained within said delayed video output signal (S5).

8. Method according to claim 7, **characterized in that** said at least one motion map signal (S8) or error signal (S9) is also used to dynamically determine said mixing ratios used during steps b) and c).

9. Method according to claim 8, **characterized in that** said mixing ratio used during step c) is dynamically determined so that said second mixing means (4) emphasises said first mixed signal (S3) more if said motion map signal (S8) or error signal (S9) indicates or shows significant differences and in particular high motion, and emphasises said delayed and motion compensated video output signal (S5') more if said differences are minor and in particular if said motion is low.

10. Method according to anyone of the claims 6 to 9, **characterized by** determining said mixing ratio used during step c) so that said second mixing means (4) emphasizes said first mixed signal (S3) more if said spatially filtered signal (S2) strongly differs from said delayed and motion compensated video output signal (S5'), and emphasizes said delayed and motion compensated video output signal (S5') more if said spatially filtered signal (S2) only slightly differs from said delayed and motion compensated video output signal (S5').

11. Method according to anyone of the claims 1 to 9, **characterized by** determining said mixing ratio used during step c) so that said second mixing means (4) emphasizes said first mixed signal (S3) more if said spatially filtered signal (S2) strongly differs from said delayed video output signal (S5), and emphasizes said delayed video output signal (S5) more if said spatially filtered signal (S2) only slightly differs from said delayed video output signal (S5).

12. System (1, 1', 1") for reducing noise contained within an input video signal (S1) which is capable of performing and/or realising the method for reducing noise according to anyone of the claims 1 to 11 and/or the steps thereof.

13. Computer program product, comprising computer program means adapted to perform and/or realise the method for reducing noise according to anyone of the claims 1 to 11 and/or the steps thereof, when it is executed on a computer, a digital signal processing means, or the like.

14. Computer readable storage means for storing a computer program product according to claim 13.
